Europäisches Patentamt

European Patent Office

Office européen des brevets

(19)

(11) Veröffentlichungsnummer : **0 115 570
B1**

(12) # EUROPÄISCHE PATENTSCHRIFT

(45) Veröffentlichungstag der Patentschrift :
30.07.86

(21) Anmeldenummer : 83110202.5

(22) Anmeldetag : 13.10.83

(51) Int. Cl.⁴ : **B 62 D 55/20**

(54) Gleiskette für geländegängige Fahrzeuge.

(30) Priorität : 10.01.83 DE 3300537

(43) Veröffentlichungstag der Anmeldung :
15.08.84 Patentblatt 84/33

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
EP-A- 0 044 137
DE-A- 1 605 522
DE-A- 1 780 332
DE-A- 2 611 681

(73) Patentinhaber : Hoesch Aktiengesellschaft
Eberhardstrasse 12
D-4600 Dortmund 1 (DE)

(72) Erfinder : Steinborn, Wilhelm
Dorfmühlenstrasse 7
D-5630 Remscheid (DE)

(74) Vertreter : Happe, Otto, Dipl.-Ing.
Isselburger Strasse 12
D-5000 Köln 60 (DE)

## Beschreibung

Die Erfindung betrifft eine Gleiskette für geländegängige Fahrzeuge, insbesondere gepanzerte Fahrzeuge, deren Kettenglieder durch jeweils zwei Endverbinder und einen Mittelverbinder miteinander verbunden sind, wobei die Kettenglieder an ihrer Unterseite (Aufstandsseite) zu beiden Seiten der senkrechten Gleismittelebene mit mindestens zwei hervorstehenden Aufstandsrippen aus verschleißfestem Stahl versehen sind, mit Nuten für die Befestigung von zwei sich an der Unterseite der Kettenglieder abstützenden Laufpolstern, und wobei die Oberseite der Kettenglieder beidseitig des Kettenführungszahns einen Überrollbereich für die Laufrollen aufweist.

Gleisketten der vorgenannten Art sind sehr verschleißfest und lassen ferner eine hohe Fahrgeschwindigkeit zu. Die einschiebbaren Laufpolster sind verhältnismäßig großflächig ausgebildet, so daß die Flächenpressung und damit der Verschleiß der Laufpolster gering sind.

Die bekannten Gleisketten (vgl. z. B. DE-A-1 780 332) weisen aber den Nachteil auf, daß der verhältnismäßig breite Spalt zwischen den einzelnen Kettengliedern zu einem unruhigen Lauf des gesamten Fahrwerks führt, da die die Aufstandskraft auf das Fahrwerk übertragenden Laufrollen in den Gelenken zwischen den Kettengliedern keine feste Abstützung finden. Dadurch tritt bei jedem Überrollen eines Spaltes durch eine Laufrolle eine stoßförmige Erschütterung auf, die sich als Schwingung auf das Fahrzeug überträgt und nur durch aufwendige Maßnahmen gedämpft werden kann.

Es ist zwar bereits versucht worden, die Laufruhe geländegängiger Fahrzeuge dadurch zu verbessern, daß die Mittelverbinder der Gleiskette weit in den Überrollbereich der Laufrollen hineingezogen werden (DE-A-2 611 681). Durch diese Gestaltung der Gleiskette verhält sie sich wie eine Gliederkette, mit der Folge, daß hinsichtlich des Abrollverhaltens der Laufrollen auf der Kettenoberseite die Teilung der Kette verdoppelt bzw. der Teilungsabstand und damit die Abknickung in der Teilungsfuge der Gleiskette halbiert wird. Die Stoßbelastung der Laufrollen beim Überrollen eines Kettengelenkes ist dadurch nicht mehr so groß, jedoch doppelt so häufig wie bei anders gestalteten Gleisketten.

Bei der vorstehend beschriebenen, bekannten Gleiskette wird die Laufruhe noch dadurch verbessert, daß auch die Mittelverbinder Laufpolster aufweisen, die jeweils versetzt zu den an den Kettengliedern befestigten Laufpolstern angeordnet sind. Dadurch werden ein gleichmäßiger Lauf und ein gleichmäßiges Überrollverhalten der Laufrollen über die Kettenoberseite erzielt. Die bekannte Gleiskette weist jedoch den Nachteil auf, daß die Laufpolster nicht mehr einschiebbar, sondern mit den Kettengliedern und den Mittelverbindern fest verbunden und daher nicht mehr leicht auswechselbar sind.

Der Erfindung liegt die Aufgabe zugrunde, die Gleiskette der eingangs genannten Art derart zu verbessern, daß sie bei Erzielung einer sehr hohen Laufruhe ein Auswechseln der Laufpolster gestattet und daß darüber hinaus die Laufpolster eine verhältnismäßig große Aufstandsfläche aufweisen, so daß eine erhöhte Lebensdauer der Laufrollen gewährleistet ist. Diese Aufgabe wird durch die im Anspruch 1 angegebene Erfindung gelöst.

Dadurch, daß bei der erfindungsgemäßen Gleiskette der Mittelverbinder mit seinen beiden Enden weit in die Überrollbereiche der Kettenglieder hineinragt, können die Laufrollen nicht mehr in die jeweiligen Teilungsfugen der Gleiskette einsinken, so daß auch keine Stoßbeanspruchung der Laufrollen mehr auftritt. Durch die erfindungsgemäße Gestaltung der Gleiskette wird erreicht, daß beim Überrollen einer Laufrolle über eine Teilungsfuge zwischen den Kettengliedern sich die Laufrolle auf dem Mittelverbinder abstützt, während beim Überrollen einer Laufrolle über eine Teilungsfuge zwischen zwei Mittelverbindern sich die Laufrolle auf dem dazwischen befindlichen Kettenglied abstützt.

Ferner erlaubt die erfindungsgemäße Gestaltung der Gleiskette eine sehr große Aufstandsfläche der Laufpolster, weil sie bei größtmöglicher Ausnutzung ihrer Breite eine so große Länge aufweisen können, daß sie sich etwa in der Mitte des Mittelverbinders berühren. Darüber hinaus können die Laufpolster — wie an sich bekannt — in einfacher Weise ausgewechselt werden.

Die erfindungsgemäße Gleiskette weist den weiteren Vorteil auf, daß die Kettengliedgelenkbolzen in ihren Gummi- oder Kunststoffpackungen einem geringeren Verschleiß ausgesetzt sind, weil der Mittelverbinder die Kettengliedgelenkbolzen über eine größere Länge umschließt als es bei den bekannten Gleisketten der Fall ist. Wegen der größeren Umschließungslänge wird die Durchbiegung der Kettengliedgelenkbolzen und dadurch die Flankenpressung des Packungsmaterials verringert.

Ein zusätzlicher Vorteil der erfindungsgemäßen Gleiskette besteht überraschender Weise darin, daß sie auch an den Umlenkrollen und an der Triebkranztrommel zu einer erhöhten Laufruhe führt. Da die Teilung zwischen den Kettengliedgelenkbolzen unterschiedlich groß ist, weil die beiden Kettengliedgelenkbolzen, die in einen Verbinder eingreifen, einen geringeren Abstand voneinander aufweisen als die in ein Kettenglied eingreifenden beiden Kettengliedgelenkbolzen, dürfte beim Umlaufen der Gleiskette um eine Umlenkrolle oder der Triebkranztrommel theoretisch die Oberseite des Mittelverbinders nicht zur Anlage an die Umlenkrollen bzw. die Triebkranztrommel kommen. In der Praxis wird jedoch eine Anlage erreicht, und zwar wegen der verhältnismäßig dicken Gummierung der Umlenkrollen und der Triebkranztrommel. Die Maßtoleranzen werden dadurch ausgeglichen, daß sich die Kettenglieder mit ihren Oberseiten, hervorgerufen durch die Zugspannung der Gleiskette, derart in die Gummierung eindrücken, daß die Oberseiten der Mittelverbinder doch zur Anlage an die Umlenkrollen bzw. die Triebkranztrommel kommen, so daß ein Quasipolygoneffekt erzielt wird, der beim Umlaufen der Gleiskette um die Umlenkrollen bzw. um die Triebkranztrommel eine wesentliche Laufberuhigung der Gleiskette bewirkt.

Vorteilhafte Weiterbildungen der Erfindung sind in den abhängigen Ansprüchen beschrieben.

Die Erfindung ist anhand der Zeichnung näher erläutert. Es zeigen :

Figur 1 einen aus einem Kettenglied, zwei Endverbindern und einem Mittelverbinder gebildeten Abschnitt einer Gleiskette, von unten gesehen, mit einem voll und einem nur teilweise eingeschobenen Laufpolster,

Figur 2 den Gleiskettenabschnitt gemäß Fig. 1 in Vorderansicht ;

Figur 3 das Kettenglied des Gleiskettenabschnitts gemäß Fig. 1 in Seitenansicht ;

Figur 4 den Mittelverbinder des Gleiskettenabschnitts gemäß Fig. 1 in Seitenansicht ;

Figur 5 einen längeren Abschnitt einer Gleiskette in Bereich einer Umlenkrolle in Seitenansicht.

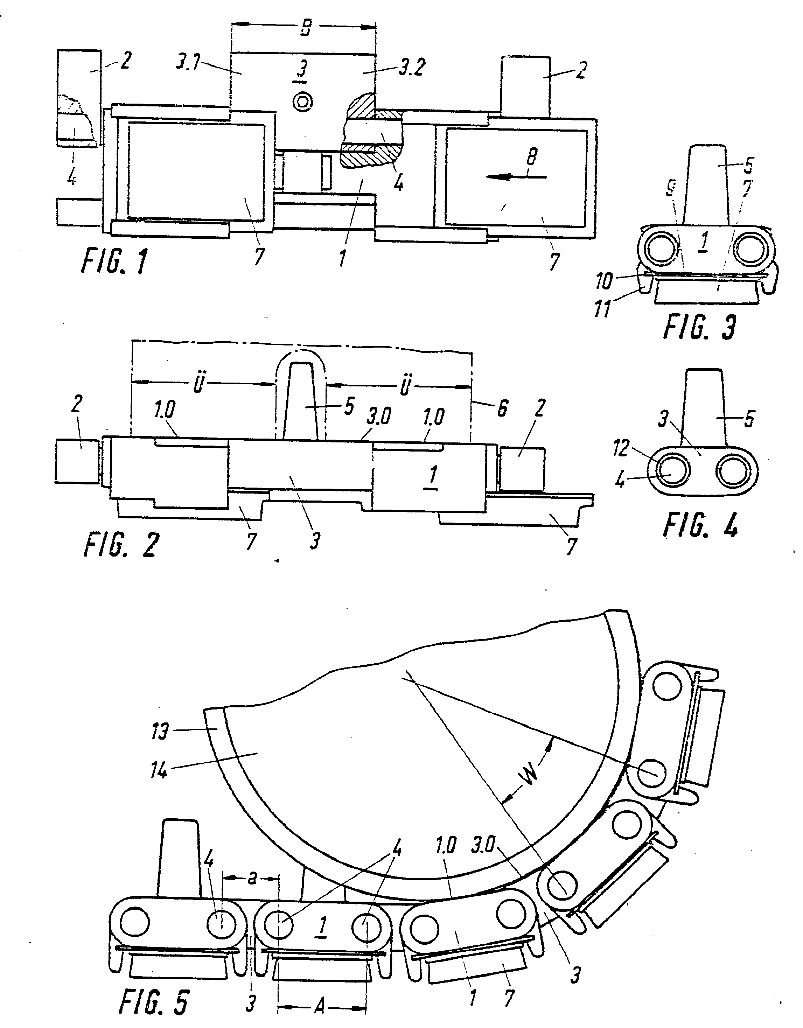

Der in den Fig. 1 und 2 dargestellte Gleiskettenabschnitt besteht aus einem Kettenglied 1, das mit dem angrenzenden, nicht dargestellten Kettenglied durch zwei Endverbinder 2 und einem Mittelverbinder 3 mittels eines Kettengliedgelenkbolzens 4 gelenkig verbunden ist. Auf der Oberseite 1.0 des Kettengliedes 1 ist ein Führungszahn 5 vorgesehen (Fig. 2 u. 3). Die den Bodendruck der Gleiskette auf das Fahrwerk übertragende — in strichpunktierten Linien angedeutete — Laufrolle 6 überrollt die Gleiskette beidseitig des Führungszahns 5, so daß die Oberseite 1.0 des Kettengliedes 1 zwei Überrollbereiche Ü aufweist. Die Breite B des Mittelverbinders 3 ist so bemessen, daß er sich mit seinen beiden Enden 3.1 und 3.2 über mindestens ein Viertel jedes Überrollbereiches Ü erstreckt ; in dem dargestellten Ausführungsbeispiel erstrecken sich die beiden Enden 3.1 und 3.2 des Mittelverbinders 3 über etwa ein Drittel jedes Überrollbereiches Ü. Die Oberseite 3.0 des Mittelverbinders 3 und die Oberseite 1.0 des Kettengliedes 1 fluchten miteinander (Fig. 2). Die Unterseite des Mittelverbinders 3 ist mindestens an den sich über die beiden Überrollbereiche Ü erstreckenden Enden 3.1 und 3.2 so ausgebildet, daß die Laufpolster 7 darunter frei eingeschoben werden können (vgl. Pfeil 8 in Fig. 1). Für die Befestigung der Laufpolster 7 an dem Kettenglied 1 ist auf die Rückenfläche jedes Laufpolsters 7 ein Federblech 9 aufvulkanisiert, dessen seitlich überstehende Ränder in Nuten 10 eingreifen, die in den an der Unterseite des Kettengliedes 1 hervorstehenden Aufstandsrippen 11 vorgesehen sind (vgl. Fig. 3).

Der in Fig. 4 dargestellte Mittelverbinder 3, der die Kettengliedgelenkbolzen 4 über Gummi- oder Kunststoffpackungen 12 umgreift, ist mit einem Führungszahn 5 versehen.

Aus Fig. 5 ist zu ersehen, daß der Abstand a der beiden in einen Mittelverbinder 3 eingreifenden Kettengliedgelenkbolzen 4 kleiner ist als der Abstand A der beiden in ein Kettenglied 1 eingreifenden Kettengliedgelenkbolzen 4. Trotzdem kommt wegen der dicken Gummierung 13 der Umlenkrolle 14 nicht nur die Oberseite 1.0 der Kettenglieder 1 zur Anlage, sondern auch die Oberfläche 3.0 der Mittelverbinder 3, da sich die Oberfläche 1.0 der Kettenglieder 1 in die Gummierung eindrückt. Die Gesamtkettenteilung W zwischen zwei Kettengliedern 1 ist auch bei dieser Gleiskette jeweils gleich.

## Patentansprüche

1. Gleiskette für geländegängige Fahrzeuge, insbesondere gepanzerte Fahrzeuge, deren Kettenglieder (1) durch jeweils zwei Endverbinder (2) und einen Mittelverbinder (3) miteinander verbunden sind, wobei die Kettenglieder (1) an ihrer Unterseite (Aufstandsseite) zu beiden Seiten der senkrechten Gleismittelebene mit mindestens zwei hervorstehenden Aufstandsrippen (11) aus verschleißfestem Stahl versehen sind, mit Nuten für die Befestigung von zwei sich an der Unterseite der Kettenglieder abstützenden Laufpolstern (7), und wobei die Oberseite (10) der Kettenglieder (1) beidseitig des Kettenführungszahns (5) einen Überrollbereich (Ü) für die Laufrollen aufweist, dadurch gekennzeichnet, daß die Breite (B) jedes Mittelverbinders (3) so bemessen ist, daß er sich mit seinen beiden Enden (3.1, 3.2) über mindestens ein Viertel jedes Überrollbereichs (Ü) der Kettenglieder (1) erstreckt ; daß die Oberseite (3.0) jedes Mittelverbinders (3) mit der Oberseite (1.0) der Kettenglieder (1) fluchtet und daß die Unterseite jedes Mittelverbinders (3) mindestens in den sich über die beiden Überrollbereiche (Ü) erstreckenden Abschnitten so ausgebildet ist, daß die Laufpolster (7) frei eingeschoben werden können.

2. Gleiskette nach Anspruch 1, dadurch gekennzeichnet, daß der Mittelverbinder (3) an seiner Oberseite (3.0) mit einem Führungszahn (5) versehen ist.

3. Gleiskette nach Anspruch 1 oder 2, dadurch gekennzeichnet, daß der Mittelverbinder (3) an der Unterseite mit Aufstandsrippen (11), Aufstandsstollen o. dgl. versehen ist.

4. Gleiskette nach Anspruch 1, 2 oder 3, dadurch gekennzeichnet, daß der Mittelverbinder (3) die Kettengliedgelenkbolzen (4) über Gummi- oder Kunststoffpackungen (12) umgreift.

## Claims

1. Caterpillar track for land vehicles, in particular armoured vehicles, the track links (1) of which are connected with one another by two end connectors (2) and a middle connector (3), wherein the track links (1) are provided on the underside (contact side) at both sides of the vertical middle plane of the track with at least two projecting contact ribs (11) of wear-resistant steel, having grooves for the securement of two running pads (7) supported on the underside of the track links, and wherein the upper side (1.0) of the track links (1) has a roll-over region (Ü) for the running rollers on both sides of the track-guiding teeth (5), characterised in that the breadth (B) of each middle connector (3) is such that both of its ends (3.1, 3.2) overlie at least a quarter of each roll-over region (Ü) of the track links (1) ; that the upper side (3.0) of each middle connector (3) is aligned with the upper side (1.0) of the track links and that the underside of each middle connector (3) is so formed, at least in the sections extending over the two roll-over regions (Ü), that the running pads (7) can be freely introduced.

2. Caterpillar track according to claim 1, characterised in that the middle connector (3) is provided on its upper side (3.0) with a guide tooth (5).

3. Caterpillar track according to claim 1 or 2, characterised in that the middle connector (3) is provided on the underside with projecting ribs (11), projecting studs or the like.

4. Caterpillar track according to claim 1, 2 or 3, characterised in that the middle connector (3) embraces the track link pivot bolts (4) through packings (12) of rubber or synthetic material.

**Revendications**

1. Chenille pour véhicules tout terrain, en particulier, des véhicules blindés, chenille dont les maillons (1) sont assemblés l'un à l'autre chaque fois par deux raccords en bout (2) et un raccord central (3), ces maillons (1) de la chenille comportant, sur leur face inférieure (face de contact au sol) et des deux côtés du plan médian vertical de la chenille, au moins deux nervures de contact au sol (11) ressortant en saillie et réalisée en acier résistant à l'usure avec des rainures en vue de fixer deux patins de déplacement prenant appui sur la face inférieure des maillons de la chenille, la face supérieure (10) des maillons (1) de la chenille comportant, de part et d'autre de la dent de guidage (5) de la chenille, une zone de roulement (Ü) pour les galets de roulement, caractérisée en ce que la largeur (B) de chaque raccord central (3) est calculée de telle sorte qu'il s'étende, avec ses deux extrémités (3.1, 3.2), au moins sur un quart de chaque zone de roulement (Ü) des maillons (1) de la chenille ; en ce que la face supérieure (3.0) de chaque raccord central (3) est affleurante à la face supérieure (1.0) des maillons (1) de la chenille et en ce que la face inférieure de chaque raccord central (3) est réalisée, au moins dans les parties s'étendant sur les deux zones de protection (U), de telle sorte que l'on puisse faire glisser librement les patins de déplacement (7).

2. Chenille suivant la revendication 1, caractérisée en ce que le raccord central (3) comporte une dent de guidage (5) sur sa face supérieure (3.0).

3. Chenille suivant la revendication 1 ou 2, caractérisée en ce que le raccord central (3) comporte, sur sa face inférieure, des nervures de contact au sol (11), des crampons de contact au sol ou analogues.

4. Chenille suivant la revendication 1, 2 ou 3, caractérisée en ce que le raccord central (3) entoure les axes d'articulations (4) des maillons de la chenille à l'intervention de garnitures en caoutchouc ou en matière synthétique (12).

FIG. 1

FIG. 2

FIG. 3

FIG. 4

FIG. 5